# EUROPÄISCHE PATENTANMELDUNG

(11) **EP 3 470 718 A1**
(43) Veröffentlichungstag der Anmeldung: **17.04.2019**
(21) Anmeldenummer: 17196304.4
(22) Anmeldetag: 13.10.2017
(51) Int. Cl.: F16L 5/04, F16L 5/14, H02G 3/04, E04B 1/94

(54) **BRANDSCHUTZVORRICHTUNG**

(71) Anmelder: HILTI Aktiengesellschaft, 9494 Schaan (LI)
(72) Erfinder: Monden, Thomas, 87778 Stetten (DE); Mordau, Ulf, 86875 Waal (DE); Paetow, Mario, 86899 Landsberg am Lech (DE); Weixler, Roland, 86807 Buchloe (DE)
(74) Vertreter: Hilti Aktiengesellschaft Corporate Intellectual Property

(57) **Zusammenfassung**

Es wird eine Brandschutzvorrichtung (10) zum Abdichten von Wand- oder Deckendurchbrüchen angegeben, aufweisend ein Gehäuse (12), welches eine Gehäusewand (15) und jeweils eine Öffnung (20, 22) an den entgegengesetzten Enden der Gehäusewand (15) aufweist, wobei im Gehäuseinneren zumindest abschnittsweise mindestens ein Streifen (13) aus einem intumeszierenden Material (14) angeordnet ist, der parallel zu einer Umfangsrichtung des Gehäuses (12) verläuft.

## Beschreibung

Die vorliegende Erfindung betrifft eine Brandschutzvorrichtung zur Durchführung von Rohren oder Leitungen durch eine Gebäudeöffnung, beispielsweise einen Wand- oder Deckendurchbruch.

Derartige Durchführungen in Wänden oder Decken müssen die geltenden Anforderungen hinsichtlich Brandschutz erfüllen. Das heißt, die Wand- und Deckendurchbrüche müssen in ausreichendem Maß gegen die Weiterleitung von Bränden gesichert sein. Zudem soll eine thermische Sicherung der Räume gewährleistet sein, sodass verhindert wird, dass die Temperatur auf einer dem Feuer abgewandten Seite der betreffenden Decke oder Wand so stark ansteigt, dass es dort zur Selbstentzündung kommen kann. Dabei soll die Installation der Leitungen möglichst einfach durchführbar sein.

Es ist bekannt, zu diesem Zweck kastenförmige Gehäuse in die Öffnungen einzusetzen, die einen Durchlasskanal für die zu installierenden Leitungen und Rohre bilden. Solche Gehäuse können in eine Wand oder Decke eingegossen und nach dem Durchführen der Leitungen mit Dichtmasse gefüllt werden. Dieses Verfahren ist jedoch aufgrund der Aushärtezeiten der Dichtmasse und des handwerklichen Aufwands relativ aufwendig. Des Weiteren sind Leitungsdurchführungen bekannt, die bereits integrierte Abdichtungen aufweisen. Allerdings sind diese unflexibel, was die Anzahl und Geometrie der zu installierenden Leitungen angeht.

Es ist daher eine Aufgabe der vorliegenden Erfindung, eine Brandschutzvorrichtung anzugeben, die einfach zu installieren und hinsichtlich der Anzahl und Geometrie der zu installierenden Leitungen flexibel ist.

Diese Aufgabe wird erfindungsgemäß gelöst durch eine Brandschutzvorrichtung zum Abdichten von Wand- oder Deckendurchbrüchen, aufweisend ein Gehäuse, welches eine Gehäusewand und jeweils eine Öffnung an den entgegengesetzten Enden der Gehäusewand aufweist, wobei im Gehäuseinneren zumindest abschnittsweise mindestens ein Streifen aus einem intumeszierenden Material angeordnet ist, der parallel zu einer Umfangsrichtung des Gehäuses verläuft.

Im Brandfall bläht sich das intumeszierende Material auf, wodurch der Wand- oder Deckendurchbruch zuverlässig abgedichtet ist und gegen eine Weiterleitung des Brandes gesichert ist.

Gemäß einer bevorzugten Ausführungsform weist die Brandschutzvorrichtung mindestens zwei Streifen aus intumeszierendem Material auf, wobei die Streifen parallel zueinander angeordnet sind. Beispielsweise sind zwei Streifen an gegenüberliegenden Längsseiten der Gehäusewand angeordnet. Das intumeszierende Material kann sich somit im Brandfall innerhalb des Gehäuses verpressen und weist dadurch eine hohe mechanische Stabilität auf. Durch eine ausreichende mechanische Stabilität wird gewährleistet, dass das intumeszierende Material beispielsweise bei Löscharbeiten in dem Gehäuse verbleibt, und nicht durch einen auftreffenden Wasserstrahl aus dem Gehäuse gespült wird.

Alternativ oder zusätzlich können mehrere Streifen aus intumeszierendem Material an derselben Seite der Gehäusewand angeordnet sein.

Zusätzlich können jeweils ein oder mehrere Streifen aus intumeszierendem Material an den Querseiten der Gehäusewand angeordnet sein.

Je mehr intumeszierendes Material in dem Gehäuse angeordnet ist, desto stabiler ist im Brandfall die Brandschutzbarriere. Insbesondere ist die Brandschutzvorrichtung derart ausgebildet, dass bereits nach dem Einsetzen der Brandschutzvorrichtung in einen Wand- oder Deckendurchbruch ein umfangreicher Brandschutz gewährleistet ist. Darüber hinaus hält die Brandschutzvorrichtung einem UL-Brandtest für mindestens zwei Stunden stand.

Das Gehäuse kann einteilig oder mehrteilig ausgeführt sein. Es kann aus Kunststoff oder Metall bestehen.

Gemäß einer Ausführungsform kann eine Öffnung des Gehäuses durch ein Dichtelement abgedichtet sein. Durch die Dichtung kann die Brandschutzvorrichtung blickdicht, rauchgasdicht und wasserdicht ausgebildet sein, insbesondere kann die Brandschutzvorrichtung als Konvektionssperre dienen. Außerdem wird durch die Brandschutzvorrichtung die Übertragung von Luftschall und Körperschall gedämpft.

Vorzugsweise ist das Dichtelement ein Formschaumteil. Dieses kann je nach Montagesituation individuell angepasst werden. Insbesondere können von einem Anwender selbst Aussparungen in das Formschaumteil eingebracht werden, wobei die Größe, Anzahl und Position der Aussparungen frei festgelegt werden kann. Das Formschaumteil kann zu diesem Zweck aus dem Gehäuse entnehmbar sein. Die Brandschutzvorrichtung kann dadurch besonders flexibel an eine vorgesehene Leitungskonfiguration angepasst werden.

Beispielsweise weist das Dichtelement einen offenzelligen Schaum auf. Insbesondere ist das Dichtelement komprimierbar. Dadurch können Ungenauigkeiten beim Zuschnitt ausgeglichen werden, indem die Öffnungen in dem Dichtelement mit Untermaß eingebracht werden. Somit sorgt das Dichtelement für eine zuverlässige Abdichtung.

Das Dichtelement weist vorzugsweise eine Höhe von mindestens 10 mm auf.

Gemäß einer Ausführungsform weist das Dichtelement mindestens eine vorgefertigte Öffnung auf. Dadurch kann eine Leitungsinstallation besonders schnell durchgeführt werden, da von einem Anwender keine oder weniger Öffnungen in das Dichtelement geschnitten werden müssen.

Die mindestens eine Öffnung des Dichtelements ist vorzugsweise durch einen Stopfen verschlossen. Dadurch gewährleistet die Brandschutzvorrichtung vollen Schutz, auch wenn nicht alle Öffnungen des Dichtelements mit Leitungen belegt sind. Beispielsweise weist das Dichtelement mehrere Öffnungen in unterschiedlichen Größen auf, welche durch Stopfen verschlossen sind. Ein Benutzer kann je nach Anwendungsfall die Öffnungen in der passenden Größe verwenden, während die übrigen Öffnungen durch die Stopfen verschlossen bleiben.

Vorzugsweise sind die Stopfen aus dem gleichen Material gefertigt wie das Dichtelement. Insbesondere sind die Stopfen als Formschaumteile ausgebildet.

Um eine besonders hohe Flexibilität hinsichtlich der Leitungsgeometrie(n) zu bieten, können die Stopfen lamellenförmig ausgebildet sein. Die einzelnen Lamellen können entsprechend dem Durchmesser der zu installierenden Leitung entnommen werden.

Alternativ oder zusätzlich kann das Dichtelement eine Schablone oder ein Raster aufweisen. Diese können einem Anwender als Hilfestellung beim Zuschneiden des Formschaumteils dienen.

Gemäß einer bevorzugten Ausführungsform weist das Dichtelement ein Brandschutzmaterial auf. Insbesondere weist das Dichtelement ein hitze- und/oder feuerhemmendes und/oder wasserdichtes Material auf oder besteht aus einem solchen Material. Im Brandfall kann sich auf dem Dichtelement eine Aschekruste bilden, welche zusätzlich das Eindringen von Wasser verhindern kann.

Gemäß einer weiteren Ausführungsform kann das Gehäuse eine Dichtebene aufweisen, die als Schalungselement zum Einbringen einer Dichtmasse in das Gehäuse dient. Dadurch kann die Brandschutzvorrichtung auf einfache Art und Weise abgedichtet werden, nachdem die Leitungen durch das Gehäuse geführt wurden.

Die Dichtebene kann ein Gewebe, ein Gelege oder ein Gitter aufweisen. Dieses kann in einem Abstand zur Öffnung an der Gehäusewand befestigt sein. Um das Gehäuse abzudichten, kann dieses ausgehend von der Dichtebene bis zum Gehäuserand mit Dichtmasse aufgefüllt werden. Durch die Dichtmasse kann die Brandschutzvorrichtung schalldicht, blickdicht, rauchgasdicht und wasserdicht ausgebildet sein. Außerdem kann sie als Konvektionssperre dienen.

Um die Montage in einem Wand- oder Deckendurchbruch zu erleichtern, kann das Gehäuse einen umlaufenden Flansch oder Befestigungslaschen aufweisen. Diese können dazu dienen, das Gehäuse vor dem Eingießen in einer festen Position zu fixieren. Zudem ist die Brandschutzvorrichtung dadurch besonders einfach montierbar.

Um eine größtmögliche Flexibilität zu bieten, kann das Gehäuse höhenverstellbar sein. Zu diesem Zweck kann das Gehäuse zwei Gehäuseteile aufweisen, die ineinander gesteckt sind und auseinanderziehbar sind. Dadurch kann das Gehäuse an verschieden dicke Wände und Decken angepasst werden.

Beispielsweise weist das Gehäuse eine Rasterung auf, wobei das Gehäuse entsprechend der Rasterung stufenweise höhenverstellbar ist. Die Rasterung kann ineinandergreifende Prägungen und Vorsprünge aufweisen, wobei ein erstes Gehäuseteil die Prägungen und ein zweites Gehäuseteil die Vorsprünge aufweisen kann.

In einer alternativen Ausführungsform kann das Gehäuse stufenlos höhenverstellbar sein. Um eine stufenlose Verstellbarkeit zu erreichen, kann das Gehäuse einen Klemmmechanismus aufweisen. Der Klemmmechanismus kann derart ausgebildet sein, dass die beiden Gehäuseteile in einer festen Position zueinander gehalten sind, aber unter Kraftaufwand auseinandergezogen oder zusammengeschoben werden können.

Gemäß einer weiteren Ausführungsform kann das Gehäuse modular erweiterbar sein.

Die Brandschutzvorrichtung kann einen Deckel aufweisen, um das Gehäuse beim Eingießen in einen Durchbruch abzudichten, sodass kein Beton in das Gehäuse gelangen kann. Der Deckel kann nach dem Eingießen entfernt werden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 einen Querschnitt durch eine erfindungsgemäße Brandschutzvorrichtung,
- Figur 2 die Brandschutzvorrichtung mit einem zusätzlichen Dichtelement,
- Figur 3 einen Längsschnitt durch eine Brandschutzvorrichtung,
- Figur 4 eine Draufsicht auf die Brandschutzvorrichtung aus Figur 3,
- Figur 5 eine Brandschutzvorrichtung mit einer Dichtebene und
- Figur 6 eine Brandschutzvorrichtung in einer Seitenansicht.

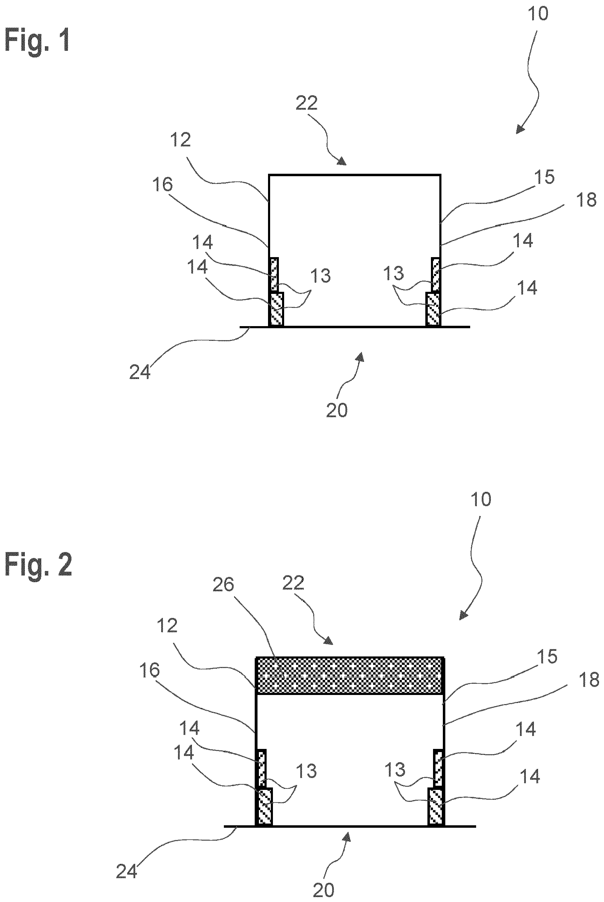

Figur 1 zeigt einen Querschnitt durch eine Brandschutzvorrichtung 10. Die Brandschutzvorrichtung 10 weist ein Gehäuse 12 auf, in dem ein intumeszierendes Material 14 angeordnet ist. Insbesondere ist das intumeszierende Material 14 in Form von Streifen 13 an zwei gegenüberliegenden Längsseiten 16, 18 einer Gehäusewand 15 angeordnet. Die Streifen 13 des intumeszierenden Materials 14 sind unterschiedlich dick ausgebildet. Ein Streifen 13, der direkt angrenzend zu einer ersten Öffnung 20 des Gehäuses angeordnet ist, ist breiter als ein Streifen 13, der näher an einer zweiten Öffnung 22 angeordnet ist. In der in Figur 1 gezeigten Ausführungsform sind die Streifen 13 an einer Längsseite 16, 18 jeweils direkt übereinander angeordnet. Die Streifen 13 können aber auch zueinander beabstandet angeordnet sein.

Die Größe der Öffnungen 20, 22 kann zwischen 100 mm x 100 mm und 400 mm x 1000 mm liegen.

An einem umlaufenden Rand des Gehäuses 12 ist ein Flansch 24 angeordnet. Dieser dient dazu, die Brandschutzvorrichtung 10 in einem Durchbruch zu platzieren. Zu diesem Zweck kann der Flansch 24 zusätzlich (nicht dargestellte) Löcher aufweisen, um die Brandschutzvorrichtung 10 mit Bolzen, Schrauben oder anderen Verbindungsmitteln auf oder an einer Schalung, einer Wand oder einer Decke zu befestigen.

Figur 2 zeigt eine Brandschutzvorrichtung 10 mit einem zusätzlichen Dichtelement 26. Das Dichtelement 26 verschließt die Öffnung 22 des Gehäuses 12 vollständig.

Das Dichtelement 26 kann ein Brandschutzmaterial aufweisen oder aus einem solchen bestehen. Beispielsweise ist das Dichtelement 26 als Formschaumteil ausgebildet und besteht aus einem Polyurethanschaum. Die Brandschutzvorrichtung 10 kann somit als Schalungselement mit integriertem Brandschutz dienen.

Das Dichtelement 26 kann von einem Benutzer mit einem geeigneten Werkzeug, beispielsweise einem Bohrer oder einer Lochsäge, entsprechend der jeweiligen Leitungskonfiguration zugeschnitten werden. Zu diesem Zweck kann das Dichtelement 26 aus dem Gehäuse 12 entnommen werden.

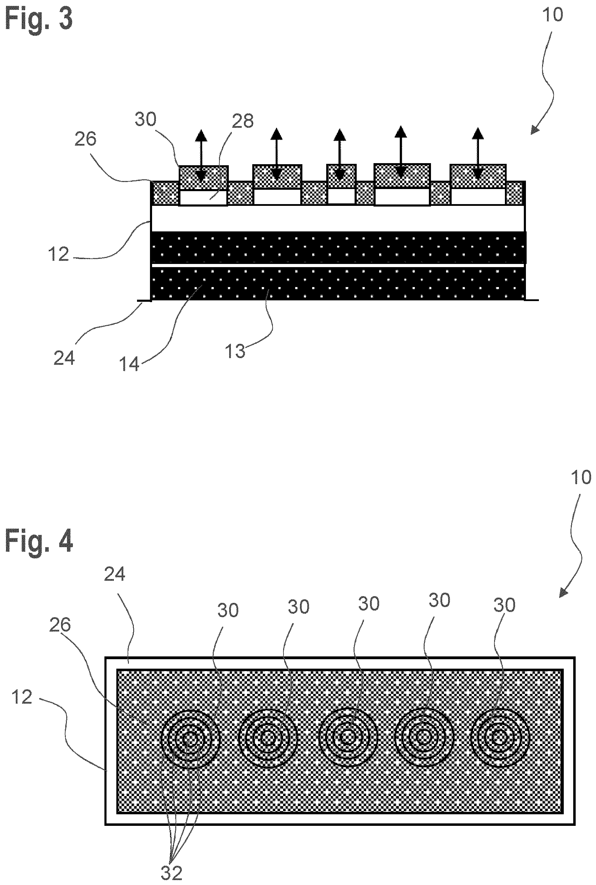

Figur 3 zeigt einen Längsschnitt durch eine Brandschutzvorrichtung 10 gemäß einer weiteren Ausführungsform. Dabei weist das Dichtelement 26 mehrere vorgefertigte Öffnungen 28 in Form von Ausnehmungen auf, die durch entnehmbare Stopfen 30 verschlossen sind. Die Stopfen 30 können von einem Benutzer entsprechend einer vorgesehenen Leitungskonfiguration entnommen werden. Gegenüber der in Figur 1 gezeigten Variante muss das Dichtelement 26 daher nicht mehr vom Benutzer aufwendig zugeschnitten werden. Natürlich ist es dennoch möglich, zusätzliche Öffnungen 28 in das Dichtelement 26 zu schneiden.

Um die Flexibilität der Brandschutzvorrichtung 10 weiter zu optimieren, können die Stopfen 30 lamellenförmig ausgebildet sein, wie in Figur 4 dargestellt. Jeder der Stopfen 30 weist vier Lamellen 32 auf. Die Anzahl der Lamellen 32 kann jedoch beliebig gewählt werden. Je nach Leitungskonfiguration und Leitungsdurchmesser können die Stopfen 30 komplett oder nur einzelne Lamellen 32 entnommen werden.

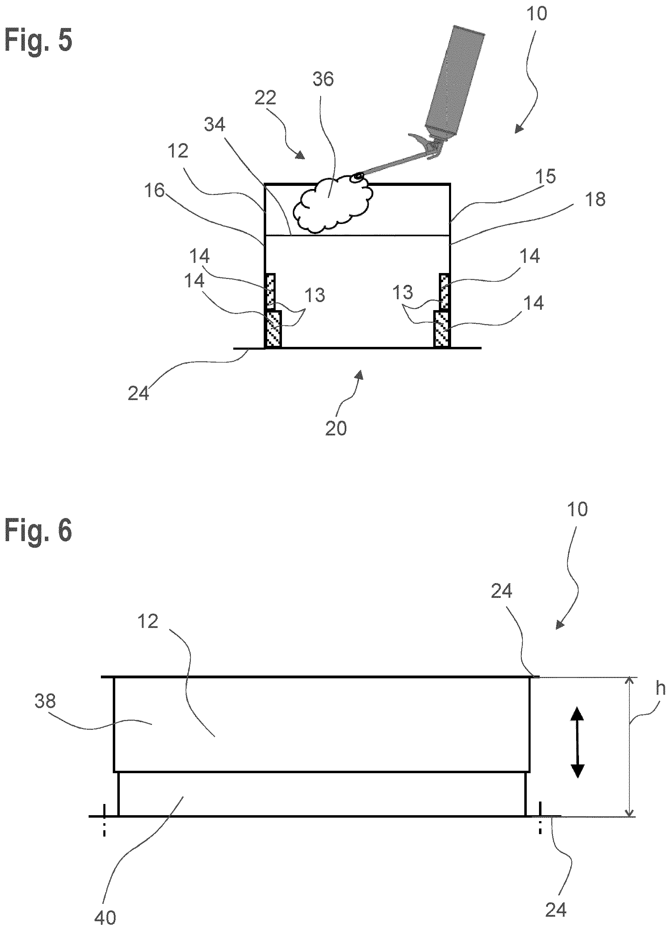

Figur 5 zeigt eine weitere Brandschutzvorrichtung 10, das im Vergleich zu der in Figur 1 gezeigten Ausführungsform zusätzlich eine Dichtebene 34 aufweist. Die Dichtebene 34 dient als Schalungselement, um eine aushärtbare Dichtmasse 36 in dem Gehäuse 12 zu positionieren. Die Dichtmasse 36 kann genau wie das Dichtelement 26 für eine rauch-, wasser- und blickdichte Abdichtung der Brandschutzvorrichtung 10 sorgen.

Beispielsweise weist die Dichtebene 34 ein Material auf, das von einem Anwender besonders einfach zugeschnitten werden kann, um eine Leitung durch das Gehäuse 12 hindurchzuführen. Insbesondere besteht die Dichtebene 34 aus einem Gewebe, einem Gelege oder einem Gitter, dass in einem Abstand zur Öffnung 22 an der Gehäusewand 15 fixiert ist.

Figur 6 zeigt eine Brandschutzvorrichtung 10 in einer Seitenansicht. Das Gehäuse 12 besteht aus zwei Gehäuseteilen 38, 40 die ineinandergeschoben sind. Dadurch ist die Höhe h des Gehäuses 12 verstellbar. Um die Höhe h zu verstellen, können die Gehäuseteile 38, 40 einfach auseinandergezogen oder zusammengeschoben werden.

Zur Fixierung der Gehäuseteile 38, 40 kann die Brandschutzvorrichtung 10 einen Klemmmechanismus aufweisen. Der Klemmmechanismus kann derart ausgebildet sein, dass das Gehäuse 12 stufenlos höhenverstellbar ist.

Alternativ können die Gehäuseteile 38, 40 eine Rasterung aufweisen, wobei das Gehäuse 12 entsprechend der Rasterung stufenweise höhenverstellbar ist.

Gemäß einer weiteren Ausführungsform können die Gehäuseteile 38, 40 durch einen Schraubmechanismus miteinander verbunden sein, der gelöst werden muss, wenn die Gehäuseteile 38, 40 zueinander verschoben werden sollen.

Die Gehäuseteile 38, 40 können auch komplett voneinander getrennt werden. Dadurch kann beispielsweise ein Gehäuseteil 38, 40 welches das Dichtelement 26 enthält, zur einfacheren Bearbeitung des Dichtelements 26 vorübergehend aus einem Durchbruch entnommen werden.

In einer alternativen Ausführungsform kann das Gehäuse 12 einteilig ausgebildet sein.

## Patentansprüche

1. Brandschutzvorrichtung (10) zum Abdichten von Wand- oder Deckendurchbrüchen, aufweisend ein Gehäuse (12), welches eine Gehäusewand (15) und jeweils eine Öffnung (20, 22) an den entgegengesetzten Enden der Gehäusewand (15) aufweist, wobei im Gehäuseinneren zumindest abschnittsweise mindestens ein Streifen (13) aus einem intumeszierenden Material (14) angeordnet ist, der parallel zu einer Umfangsrichtung des Gehäuses (12) verläuft.

2. Brandschutzvorrichtung (10) nach Anspruch 1, **dadurch gekennzeichnet, dass** die Brandschutzvorrichtung (10) mindestens zwei Streifen (13) aus intumeszierendem Material (14) aufweiset, wobei die Streifen (13) parallel zueinander angeordnet sind.

3. Brandschutzvorrichtung (10) nach einem der vorhergehenden Ansprüche, **dadurch gekennzeichnet, dass** eine Öffnung (20, 22) des Gehäuses durch ein Dichtelement (26) abgedichtet ist.

4. Brandschutzvorrichtung (10) nach Anspruch 3, **dadurch gekennzeichnet, dass** das Dichtelement (26) ein Formschaumteil ist.

5. Brandschutzvorrichtung (10) nach einem der Ansprüche 3 oder 4, **dadurch gekennzeichnet, dass** das Dichtelement (26) mindestens eine vorgefertigte Öffnung (28) aufweist.

6. Brandschutzvorrichtung (10) nach Anspruch 5, **dadurch gekennzeichnet, dass** die mindestens eine vorgefertigte Öffnung (28) durch einen Stopfen (30) verschlossen ist.

7. Brandschutzvorrichtung (10) nach Anspruch 6, **dadurch gekennzeichnet, dass** der Stopfen (30) lamellenförmig ausgeführt ist.

8. Brandschutzvorrichtung (10) nach einem der Ansprüche 3 bis 4, **dadurch gekennzeichnet, dass** das Dichtelement (26) eine Schablone oder ein Raster aufweist.

9. Brandschutzvorrichtung (10) nach einem der Ansprüche 3 bis 8, **dadurch gekennzeichnet, dass** das Dichtelement (26) ein Brandschutzmaterial aufweist.

10. Brandschutzvorrichtung (10) nach einem der Ansprüche 1 oder 2, **dadurch gekennzeichnet, dass** das Gehäuse (12) eine Dichtebene (34) aufweist, die als Schalungselement zum Einbringen einer Dichtmasse (36) in das Gehäuse (12) dient.
